# EUROPÄISCHE PATENTSCHRIFT

(11) **EP 1 898 071 B1**
(45) Veröffentlichungstag und Bekanntmachung des Hinweises auf die Patenterteilung: **04.05.2011**
(21) Anmeldenummer: 07114725.0
(22) Anmeldetag: 22.08.2007
(51) Int. Cl.: F02C 7/268, F02C 7/36, F01D 5/02

(54) **Generator-Starter-System für ein Mehrwellentriebwerk**
Generator-starter assembly for a multi-shaft driving mechanism
Système de générateur/démarreur pour une turbine à arbres multiples

(30) Priorität: 01.09.2006 DE 102006041325
(43) Veröffentlichungstag der Anmeldung: 12.03.2008
(73) Patentinhaber: Rolls-Royce Deutschland Ltd & Co KG, 15827 Blankenfelde-Mahlow (DE)
(72) Erfinder: Lück, Rudolf, 14558 Nuthetal (DE)
(74) Vertreter: Wablat, Wolfgang

(56) Entgegenhaltungen:
- WO-A1-2005/073519
- GB-A- 2 409 936
- US-A- 5 376 827
- US-A- 5 607 329
- US-A1- 2004 011 018

## Beschreibung

Die Erfindung betrifft ein Generator-Starter-System für ein Mehrwellentriebwerk mit einem an die Hochdruckwelle der Hochdruckturbine gekoppelten Generator zur Entnahme einer hohen elektrischen Leistung und zum Starten des Triebwerks.

Die Entnahme sekundärer elektrischer Energie am Triebwerk erfolgt heute bekanntermaßen pneumatisch. Eine derartige Generator-Starter-Anordnung ist jedoch bei einem hohen Bedarf des Flugzeugs an elektrischer Leistung insofern nachteilig, als eine sehr hohe Energieentnahme zu Stabilitätsproblemen am Kompressor führt und das mit der höheren Generatorleistung verbundene erhöhte Gewicht des beim Startvorgang auch als Motor fungierenden Generators eine ungünstige Gewichtsverteilung am Triebwerk zur Folge hat. Die Höhe der bereitgestellten elektrischen Leistung ist daher begrenzt.

Bekannt ist weiterhin die Entnahme der erforderlichen elektrischen Energie über einen mit der Niederdruckwelle verbundenen Generator, was jedoch wegen der variablen Drehzahl der Niederdruckwelle die Anordnung eines aufwendigen Getriebes erfordert. Zudem kann der mit Niederdruckwelle verbundene Generator nicht als Starter für das Triebwerk genutzt werden, und eine in diesem Fall erforderliche Kupplung zwischen Hoch- und Niederdruckwelle ist aufwändig und erhöht das Gewicht.

Schließlich wurde auch die Verwendung sogenannter "eingebetteter" Generatoren vorgeschlagen, die jedoch wegen der schlechten Zugänglichkeit nur mit erheblichem Aufwand gewartet und repariert werden können.

Aus US 5,376,827 ist ein integrierter Turbinengenerator zum Betrieb eines bei Synchrongeschwindigkeit arbeitenden elektrischen Generators bekannt, der einen Magnetkern zur Erzeugung magnetischer Pole und einen koaxialen, den Magnetkern umgebenden Anker zur Stromerzeugung aufweist. Die Turbine verfügt über gegenläufige äußere und innere Rotoren, wobei der Magnetkern mit dem äußeren Rotor verbunden ist. Durch den Gasstrom wird so synchron zum äußeren Rotor der Magnetkern in Drehung versetzt und erzeugt elektrische Energie.

Aus WO 2005/073519 A1 ist eine Gasturbine bekannt, bestehend aus einem Verdichter, einer Brennkammer, einer Turbine und einem Generator zur Erzeugung elektrischer Energie. Der Generator umfasst einen Ständer und einen Läufer, der als freilaufende Generatorturbine ausgebildet ist und so angetrieben von der Gasströmung relativ zum Ständer rotiert. Aus der Bewegungsenergie der Gasströmung wird so elektrische Energie erzeugt.

Der Betrieb eines Generators, der den der Hauptturbine zugeführten Gasstrom zur elektrischen Energiegewinnung nutzt, ist aus dem Stand der Technik bekannt. Zum Starten des Triebwerkes werden elektrische, pneumatische oder hydraulische Starter verwendet.

Der Erfindung liegt von daher die Aufgabe zugrunde, ein an die Hochdruckwelle gekoppeltes Generator-Starter-System für ein Mehrwellentriebwerk zu schaffen, das unter Vermeidung von Gewichts-, Schwerpunktverschiebungs- und Stabilitätsproblemen sowie bei einfacher Wartung und Reparatur eine den jeweiligen Erfordernissen entsprechende hohe Leistungsentnahme ermöglicht.

Erfindungsgemäß wird die Aufgabe mit einem gemäß den Merkmalen des Patentanspruchs 1 ausgebildeten Generator-Starter-System gelöst. Zweckmäßige Weiterbildungen der Erfindung sind Gegenstand der Unteransprüche.

Der Grundgedanke der Erfindung besteht in der Anordnung einer zusätzlichen, der Hochdruckturbine nachgeschalteten freilaufenden Turbine, deren mit Magneten bestückte Schaufelspitzen von einem aus ringförmig angeordneten elektrischen Spulen gebildeten Stator umgeben sind. Auf diese Weise wird eine vom Heißgasstrom des Triebwerks angetriebene, zentrisch angeordnete Generator-Starter-Turbine gebildet, mit der eine hohe Leistungsentnahme für das Flugzeug möglich ist und die dennoch keine Stabilitäts- und Gewichtsverteilungsprobleme bereitet und zudem leicht zugänglich ist und somit einfach gewartet und repariert werden kann. Durch eine axial an die Hochdruckwelle angeschlossene Freilaufkupplung kann die Generator-Starter-Turbine zudem mit geringem Aufwand auch zum Anlassen des Triebwerks verwendet werden. Mit Hilfe von der Generator-Starter-Turbine vorgeschalteten Leitschaufeln oder von winkelverstellbaren Turbinenschaufeln kann die Drehzahl der Generator-Starter-Turbine geregelt und unabhängig von einem sich ändernden Heißgasvolumenstrom eine konstante Drehzahl eingestellt und damit eine konstante Spannung erzeugt werden.

Gemäß einem weiteren Merkmal der Erfindung befindet sich der eigentliche Generator bzw. Starter in einem vom Luftstrom im Heißgaskanal getrennten Bypasskanal und wird durch die in diesem strömende kühlere Luft gekühlt. Die Generator-Starter-Magnete ragen über eine thermische Dichtung in eine am Außenumfang des Heißgaskanals gebildete Ringkammer, die über Kühlrippen mit der im Bypasskanal strömenden Luft gekühlt wird.

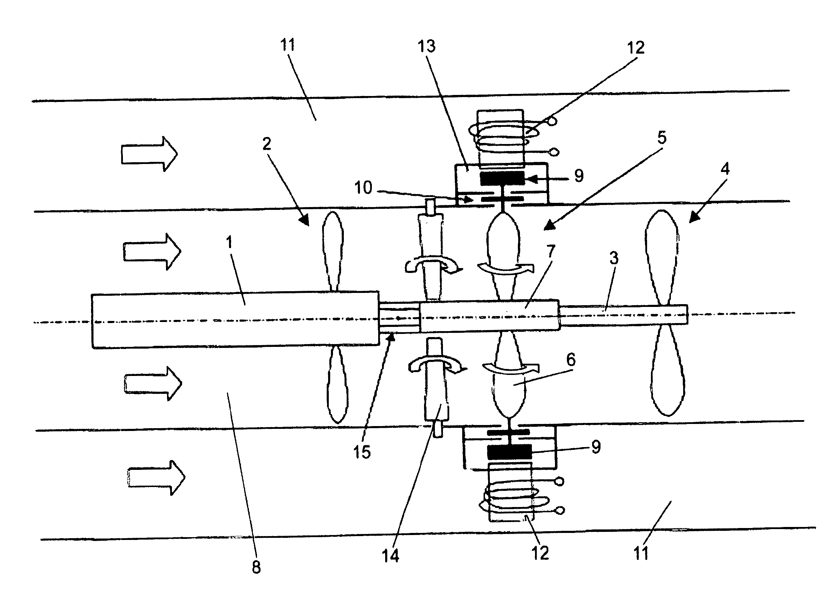

Ein Ausführungsbeispiel der Erfindung wird anhand der Zeichnung, in deren einziger Figur in vereinfachter schematischer Darstellung ein zwischen der Hochdruckturbine und der Niederdruckturbine angeordnetes Generator-Starter-System wiedergegeben ist, näher erläutert.

Wie die Zeichnung zeigt, ist zwischen der mit der Hochdruckwelle 1 verbundenen Hochdruckturbine 2 und der mit der Niederdruckwelle 3 verbundenen Niederdruckturbine 4 eine weitere Turbine, die als Generator-Starter-Turbine 5 bezeichnet wird, angeordnet. Die Generator-Starter-Turbine 5 umfasst Turbinenschaufeln 6, die am Umfang einer zusätzlichen - axial angeordneten, kurzen - Zwischenwelle 7 angeordnet sind und im Heißgaskanal 8 des Triebwerks mit Antriebsluft beaufschlagt und dabei in eine Rotationsbewegung versetzt werden. An den Spitzen der Turbinenschaufeln 6 sind Generator-Starter-Magnete 9 (Permanentmagnete oder Elektromagnete) befestigt, die - thermisch getrennt vom Heißgaskanal 8 - über eine Dichtung 10 in den Bypasskanal 11 des Triebwerks ragen. Die Turbinenschaufeln 6 mit den an diesen angebrachten Generator-Starter-Magneten 9 bilden einen Generator-Starter-Rotor, um den im Abstand ein Generator-Starter-Stator angeordnet ist, bestehend aus einer Mehrzahl jeweils an eine Spannungsquelle angeschlossener, ringförmig angeordneter Generator-Starter Spulen 12. Die Generator-Starter-Magnete 9 laufen in einer am Außenumfang des Heißgaskanals 8 angeordneten Ringkammer 13 um, die durch die thermische Dichtung 10 von dem heißen Antriebsluftstrom getrennt ist. Die thermische Dichtung 10 verhindert eine Wärmekonvektionsströmung vom Heißgaskanal 8 in die Ringkammer 13, so dass nur Druckausgleich, aber kein Wärmeaustausch erfolgen kann. Die Ringkammer 13, an deren Außenseite Kühlrippen angeordnet sein können, und auch die Generator-Starter-Spulen 12 werden durch den im Bypasskanal 11 strömenden kühleren Luftstrom gekühlt.

Wenn der Generator-Starter-Rotor mit Hilfe des Antriebsluftstroms eine Drehbewegung ausführt, wird in den Generator-Stator-Spulen 12 eine Spannung erzeugt, und das System arbeitet als Generator zur Bereitstellung der erforderlichen Energie. Die Drehzahl des Generator-Starter-Rotors und damit die Generatorleistung ist abhängig von dem jeweiligen Luftmassenstrom und wird durch Verstellen der einstellbar angeordneten Turbinenschaufeln 6 und/oder durch der Generator-Starter-Turbine 5 vorgeschaltete verstellbare Leitschaufeln 14 geregelt, das heißt, an den Luftmassenstrom angepasst. Durch die jeweilige Anstellung der Leitschaufeln 14 und/oder Turbinenschaufeln 6 kann die Drehzahl der Generator-Starter-Turbine und damit die erzeugte Spannung konstant gehalten werden.

Zum Starten des Triebwerks wird die Generator-Starter-Turbine durch Anlegen einer Spannung an die Generator-Starter-Spulen 12 als Motor (Starter) betrieben. Zu diesem Zweck ist die Zwischenwelle 7 über eine Freilaufkupplung 15 mit der Hochdruckwelle 1 verbunden. Nach dem Anlassen wird die Verbindung zwischen der Hochdruckwelle 1 und der Zwischenwelle 7 der Generator-Starter-Turbine 5 bei einer bestimmten Drehzahl selbsttätig getrennt, und die Generator-Starter-Turbine 5 nach Trennung der Generator-Starter-Spulen 12 von einer Spannungsquelle anschließend als Generator zur Energieerzeugung für das Flugzeug betrieben.

Der mit dem Gasstrom des Triebwerks betriebene und mittels verstellbarer Leitschaufeln und/oder Turbinenschaufeln lastabhängig gesteuerte Generator ist in der Lage, bei konstanter Spannung die geforderte hohe elektrische Leistung für das Flugzeug zu liefern und dient über die mit der Freilaufkupplung geschaffene Kopplung an die Hochdruckwelle außerdem als Starter für das Triebwerk. Probleme mit der Stabilität und Gewichtsverteilung am Triebwerk treten nicht auf. Der Generator ist zum Heißgasstrom thermisch abgedichtet und durch die Bypassluft gut gekühlt und zudem für Wartungs- und Reparaturarbeiten leicht zugänglich, so dass eine lange Lebensdauer gewährleistet ist.

### Bezugszeichenliste

- 1: Hochdruckwelle
- 2: Hochdruckturbine
- 3: Niederdruckwelle
- 4: Niederdruckturbine
- 5: Generator-Starter-Turbine
- 6: Turbinenschaufeln
- 7: Zwischenwelle
- 8: Heißgaskanal
- 9: Generator-Starter-Magnete
- 10: Thermische Dichtung
- 11: Bypasskanal
- 12: Generator-Starter-Spulen
- 13: Ringkammer
- 14: Einstellbare Leitschaufeln
- 15: Freilaufkupplung

## Patentansprüche

1. Generator-Starter-System für ein Mehrwellentriebwerk mit einem an die Hochdruckwelle (1) der Hochdruckturbine (2) gekoppelten Generator (5) zur Entnahme einer hohen elektrischen Leistung und zum Starten des Triebwerks, **gekennzeichnet durch** eine im Heißgaskanal (8) hinter der Hochdruckturbine angeordnete, über eine Freilaufkupplung (15) an die Hochdruckwelle (1) axial angeschlossene freilaufende Generator-Starter-Turbine (5) mit dieser vorgeschalteten, einstellbaren Leitschaufeln (14) und/oder verstellbaren Turbinenschaufeln (6), die mit Generator-Starter-Magneten (9) bestückt sind und einen in einem Generator-Starter-Stator umlaufenden Generator-Starter-Rotor bilden.

2. Generator-Starter-System nach Anspruch 1, **dadurch gekennzeichnet, dass** sich die Generator-Starter-Magnete (9) und der aus elektrischen Generator-Starter-Spulen (12) bestehende Generator-Starter-Stator in einem vom Heißgaskanal (8) getrennten, von Kühlluft durchströmten Bypasskanal (11) befinden.

3. Generator-Starter-System nach Anspruch 2, **dadurch gekennzeichnet, dass** die Generator-Starter-Magnete (9) in einer Ringkammer (13) umlaufen, die von dem Heißgasstrom im Heißgaskanal (8) durch eine thermische Dichtung (10) getrennt ist.

4. Generator-Starter-System nach Anspruch 3, **dadurch gekennzeichnet, dass** an der Ringkammer (13) Kühlrippen ausgebildet sind.

5. Generator-Starter-System nach Anspruch 1, **dadurch gekennzeichnet, dass** die Generator-Starter-Magnete (9) Permanent- oder Elektromagnete sind.

## Claims

1. Generator-starter system for a multi-shaft engine, with a generator (5) coupled to the high-pressure shaft (1) of the high-pressure turbine (2) for taking off a high electric power and for starting the engine, **characterized by** a free generator-starter turbine (5) arranged in the hot-gas duct (8) downstream of the high-pressure turbine and axially connected to the high-pressure shaft (1) via an overrunning clutch (15), with variable guide vanes (14) upstream of the generator-starter turbine (5) and/or variable turbine blades (6) which are equipped with generator-starter magnets (9) and form a generator-starter rotor rotating in a generator-starter stator.

2. Generator-starter system in accordance with Claim 1, **characterized in that** the generator-starter magnets (9) and the generator-starter stator consisting of electric generator-starter coils (12) are provided in a bypass duct (11) separated from the hot-gas duct (8) and flown by cooling air.

3. Generator-starter system in accordance with Claim 2, **characterized in that** the generator-starter magnets (9) rotate in an annular chamber (13) which is separated from the hot-gas flow in the hot-gas duct (8) by a thermal seal (10).

4. Generator-starter system in accordance with Claim 3, **characterized in that** the cooling fins are provided on the annular chamber (13).

5. Generator-starter system in accordance with Claim 1, **characterized in that** the generator-starter magnets (9) are permanent magnets or electromagnets.

## Revendications

1. Système de générateur/démarreur pour un moteur à arbres multiples, avec un générateur (5) couplé à l'arbre haute pression (1) de la turbine haute pression (2), destiné à prélever une haute puissance électrique et à démarrer le moteur, **caractérisé par** une turbine de générateur/démarreur (5) tournant librement disposée dans le canal de gaz chaud (8) en aval de la turbine haute pression et reliée axialement à l'arbre haute pression (1) par un couplage à roue libre (15), avec des aubes directrices (14) ajustables en amont de ladite turbine de générateur/démarreur (5) et/ou des aubes de turbine (6) réglables, qui sont munies d'aimants de générateur/démarreur (9) et forment un rotor de générateur/démarreur tournant dans un stator de générateur/démarreur.

2. Système de générateur/démarreur selon la revendication n° 1, **caractérisé en ce que** les aimants de générateur/démarreur (9) et le stator de générateur/démarreur constitué de bobines électriques de générateur/démarreur (12) se trouvent dans un canal-bipasse (11) traversé par de l'air de refroidissement et distinct du canal de gaz chaud (8).

3. Système de générateur/démarreur selon la revendication n° 2, **caractérisé en ce que** les aimants de générateur/démarreur (9) tournent dans une chambre annulaire (13) qui est séparée du flux de gaz chaud dans le canal de gaz chaud (8) par un joint thermique (10).

4. Système de générateur/démarreur selon la revendication n° 3, **caractérisé en ce que** des ailettes de refroidissement sont formées dans la chambre annulaire (13).

5. Système de générateur/démarreur selon la revendication n° 1, **caractérisé en ce que** les aimants de générateur/démarreur (9) sont des aimants permanents ou des électro-aimants.
